# EUROPEAN PATENT APPLICATION

(11) **EP 1 865 151 A2**
(43) Date of publication of application: **12.12.2007**
(21) Application number: 07252282.4
(22) Date of filing: 06.06.2007
(51) Int. Cl.: F01D 5/18

(54) **Microcircuit cooling for blades**

(30) Priority: 06.06.2006 US 447463
(71) Applicant: United Technologies Corporation, Hartford, CT 06101 (US)
(72) Inventor: Cunha, Francisco J., Avon Connecticut 06001 (US)
(74) Representative: Leckey, David Herbert

(57) **Abstract**

A turbine engine component (10), such as a turbine blade, includes at least one cooling circuit (20) having a plurality of legs (26, 28, 36) through which a cooling fluid flows, and a plurality of cooling devices (80) in at least one of the legs (26, 28, 36). Each of the cooling devices (80) has a heat transfer multiplier in the range of from 1.8 to 2.4 and a reattachment length in the range of from 1.9 to 2.5.

## Description

### BACKGROUND OF THE INVENTION

### (1) Field of the Invention

The present invention relates to a turbine engine component, such as a turbine blade, having a cooling microcircuit which is easy to fabricate and which has a plurality of cooling devices for effecting heat pick-up.

### (2) Prior Art

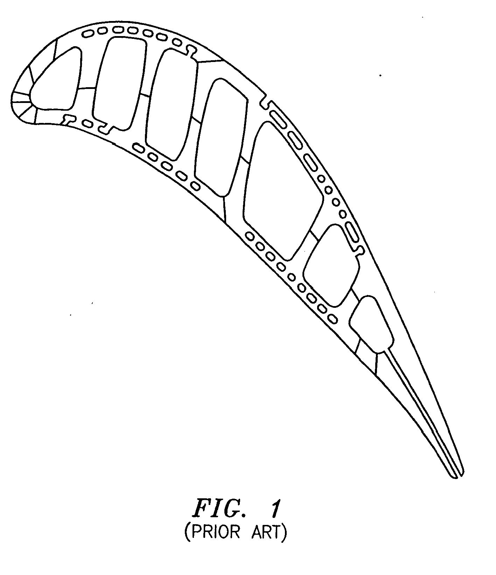

For an existing cooling microcircuit blade design configuration, such as that illustrated in the two-dimensional span of FIG. 1, each blade internal cavity feeds a microcircuit located on a side of the airfoil, either on a pressure side or on a suction side. Even though this design is desirable to desensitize the cooling design from rotational effects and sink pressure interferences in microcircuit supply flows, it makes the assembly of the numerous microcircuit cores complex.

Thus, there is a need for an improved cooling microcircuit which can be used in turbine engine components such as turbine blades.

### SUMMARY OF THE INVENTION

There is disclosed herein a turbine engine component, such as a turbine blade, having a cooling microcircuit whose assembly is not complex.

In accordance with one aspect of the present invention, there is provided a turbine engine component which broadly comprises at least one cooling circuit having a plurality of legs through which a cooling fluid flows, and a plurality of cooling devices in at least one of the legs. Each of the cooling devices has a heat transfer multiplier in the range of from 1.8 to 2.4 and a reattachment length in the range of from 1.9 to 2.5.

Also, in accordance a second aspect of the present invention, there is provided a cooling microcircuit for use in a turbine engine component which broadly comprises a first leg for receiving a cooling fluid, a second leg for receiving the cooling fluid from the first leg, and a third leg for receiving the cooling fluid from the second leg. At least one of the first and second legs contains a plurality of cooling devices. Each of the cooling devices has a heat transfer multiplier in the range of from 1.8 to 2.4 and a reattachment length in the range of from 1.9 to 2.5.

Other details of the microcircuit cooling for blades of the present invention, as well as other advantages attendant thereto, are set forth in the following detailed description and the accompanying drawings wherein like reference numerals depict like elements.

### BRIEF DESCRIPTION OF THE DRAWINGS

FIG. 1 illustrates the two dimensional span of a prior art blade;
FIG. 2 illustrates the heat transfer characteristics of a cylinder shaped cooling device;
FIG. 3 illustrates the heat transfer characteristics of a cube shaped cooling device;
FIG. 4 illustrates the heat transfer characteristics of a diamond shaped cooling device; and
FIG. 5 is a schematic representation of a turbine blade having a cooling microcircuit in accordance with the present invention.

### DETAILED DESCRIPTION OF THE PREFERRED EMBODIMENT(S)

One way to compensate for the assembly difficulties in the prior art is to combine different cores together. In this context, it is also desirable to increase the size of the combined microcircuits without losing thermal characteristics. In general, cooling microcircuits have banks of pedestals as cooling devices to enhance heat pick-up. While employing these cooling devices in the cooling microcircuits, it is also desirable to minimize their number for the same heat pick-up capability.

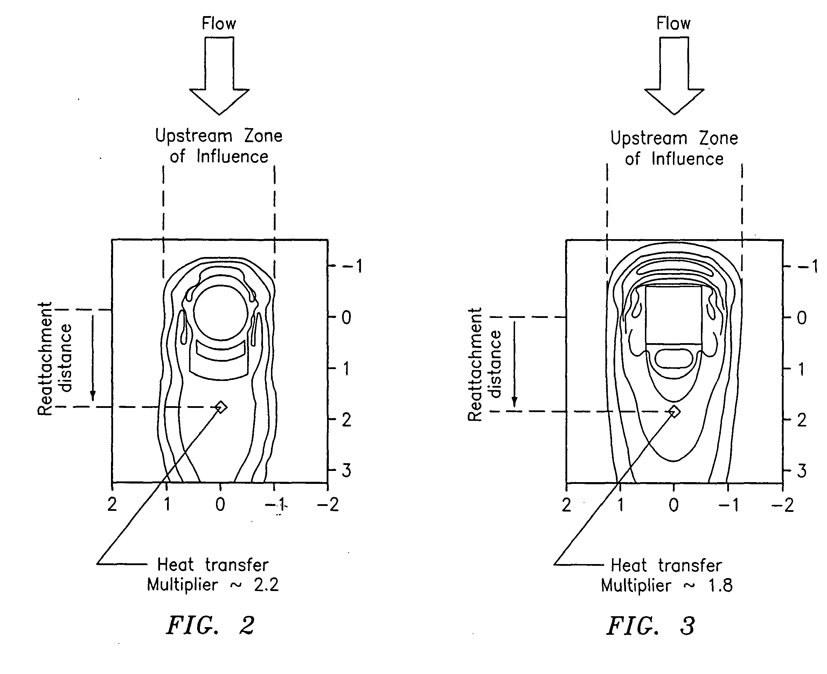

In general, at the pedestal to wall junction, there are flow horseshoe vortices due to protrusion-endwall interaction, which contribute to the heat transfer. Also, as the flow passes these pedestals, flow circuits reattach downstream from a shear layer separation. These effects are common to pedestals of different cross-sectional areas, namely cylinder, cube, and diamond-shaped pedestals. As the cross sectional shape of the pedestal changes, the flow can become more complex. For instance, the flow in the cube vicinity is highly three dimensional and dominated by a number of vortices far more complex than those around a cylinder. FIGS. 2 - 4 illustrate the heat transfer characteristics of different shaped pedestals.

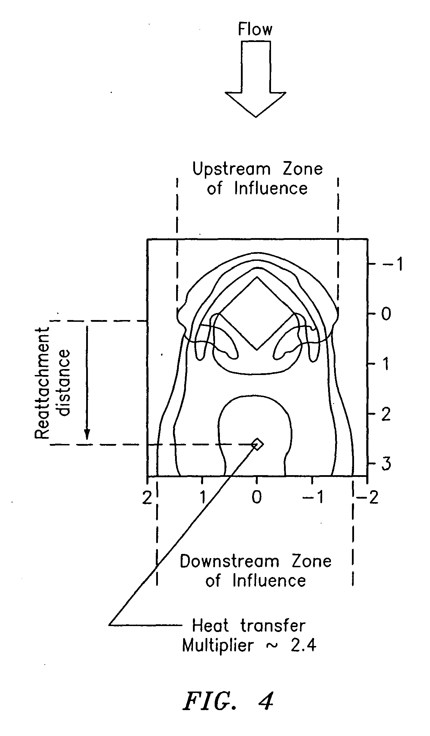

FIG. 2 illustrates the heat transfer characteristics for a cylinder shaped pedestal. FIG. 3 illustrates the heat transfer characteristics for a cube shaped pedestal. FIG. 4 illustrates the heat transfer characteristics for a diamond-shaped pedestal configuration.

From FIGS. 2 - 4, it can be seen that the spanwise domain of influence for a cylinder type pedestal is on the lowest of all three configurations, with the diamond-shaped pedestal being the greatest. The spanwise domain of influence of the diamond-shaped pedestal is about 32% greater than a cylinder shaped pedestal. With this zone of influence, the preferred interelement spacing for the diamond shaped pedestal would be twofold greater than that for the cylinder type of pedestal with even higher heat transfer enhancement. It can be concluded that for a given surface size, the number of elements needed to achieve effective heat transfer enhancement can be minimized using a diamond geometry.

For a diamond type pedestal, the value of the heat transfer multiplier recovers downstream to reach a maximum of about 2.4 heat transfer enhancement (reference being the flat plate heat transfer) at an x/d of 2.5. Not only is this the farthest location of reattachment induced enhancement downstream to the obstacle, but also it has the highest value of maximum heat transfer multiplier. The key factor responsible for this effect is the special flow characteristics related to diamond shaped pedestals. It is dominated by highly turbulent delta-wing vortices as opposed to the commonly observed, recirculating bubble. These vortices substantially elevate the surface heat transfer underneath their tracks. It is expected that such influence persists further downstream as the shear layer reattached to the endwall.

In accordance with the present invention, it is desirable to use a cooling device having a reattachment length in the range of 1.9 to 2.5 and a heat transfer multiplier relative to flat plate heat transfer in the range of from 1.8 to 2.2, preferably from 2.2 to 2.4.

The diamond shaped pedestal has the strongest reattachment-induced enhancement with the widest spread in the wake region. In addition, its reattachment length is also the longest.

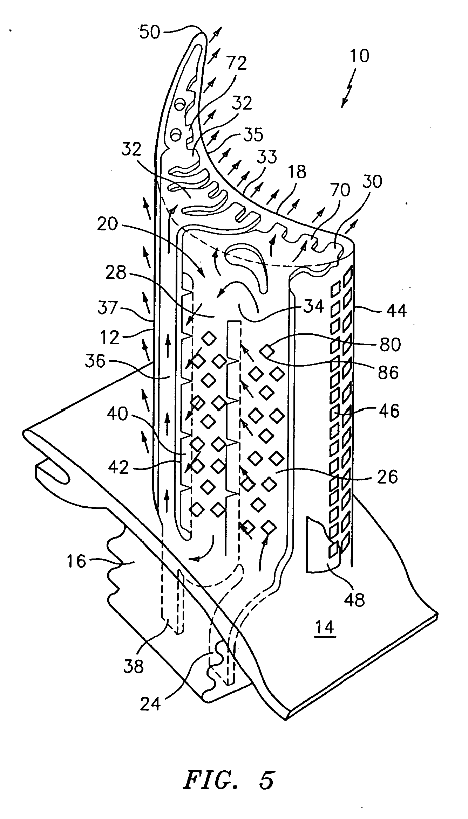

Referring now to FIG. 5, there is shown an embodiment of a turbine engine component 10 in accordance with the present invention. The turbine engine component 10, such as a turbine blade, has an airfoil portion 12, a platform 14, and a root portion 16. The airfoil portion 12 has a tip 18. A cooling microcircuit 20 is imbedded within the airfoil portion 12. The imbedded cooling microcircuit 20 receives a coolant flow stream from an inlet 24 formed within the root portion 16. The inlet 24 is preferably positioned adjacent a leading edge of the root portion 16. The inlet 24 may communicate with any suitable source of cooling fluid such as engine bleed air. The coolant flow stream is allowed to flow radially upward (in a direction away from the platform 14) through a first leg 26 of the cooling microcircuit 20 so as to take advantage of the natural pumping force. As can be seen from FIG. 5, the cooling microcircuit 20 may have a serpentine configuration. Thus, as the coolant flow stream reaches the vicinity of the tip 18 of the airfoil portion 12, the coolant flow bends and proceeds to a second leg 28. Within the second leg 28, the coolant flows radially downward (in a direction toward the platform 14). In this arrangement, some bypass coolant flow may be used to cool the tip 18 via tip cooling circuits 30 and 32. As shown in FIG. 5, the tip cooling circuit 30 comprises a plurality of spaced apart flow passages 70. Each flow passage 70 has an inlet which may communicate with and receive coolant from the first leg 26 as well as from a U-shaped flow turn portion 34 connecting the legs 26 and 28.

As can be seen from FIG. 5, each of the legs 26 and 28 has a plurality of cooling devices 80. The cooling devices 80 may have any desired shape. While it is preferred that the cooling devices be diamond shaped, they may also be cylindrical or cubed shaped. If a diamond shaped cooling device is used, it is preferred that the tip 86 of the diamond shape be aligned with the direction of the cooling fluid flowing through the respective one of the legs 24 and 26. The angle between the surfaces forming the tip 86 is important and should preferably be in the range of from 30 to 60 degrees.

As noted above, each cooling device 80 could have a cube shape. When using a cube shaped cooling device, one of the sides of the cube should be oriented substantially normal to the direction of flow of the cooling fluid in the leg in which the cooling device 80 is located.

As can be seen from FIG. 5, a plurality of cooling devices 80 may be positioned within each of the legs 24 and 26. Preferably, the cooling devices 80 in each leg are arranged in a staggered configuration.

The cooling microcircuit 20 may be provided with a third leg 36 in which the coolant flows radially upward. The tip circuit 32 also may comprise a plurality of spaced apart flow passages 72. Each flow passage 72 may have an inlet which communicates with the third leg 36 of the cooling microcircuit 20 so as to receive coolant therefrom. Each cooling circuit passage 70 and 72 has a fluid outlet or exit 33 which allows cooling fluid to flow over a surface of the airfoil portion 12. Preferably, the exits 33 are configured to allow the coolant to exit on the pressure side 35 of the airfoil portion 12. The tip cooling exits 33 from the circuits 30 and 32 may extend from a point near the leading edge 44 to a point near the trailing edge 50 of the airfoil portion 12. By providing the cooling microcircuit arrangement described herein, three separate circuits make up one unit and thus facilitate the assembly process.

A root inlet refresher leg 38 may be fabricated within the root portion 16. The root inlet refresher leg 38 is in fluid communication with the third leg 36 and may be used to insure adequate cooling flow in the third leg 36. The root inlet refresher leg 38 may communicate with any suitable source (not shown) of cooling fluid such as engine bleed air.

As can be seen from the foregoing description, an integral main body and tip microcircuit arrangement 20 has been provided. The turbine engine component 10 is cooled convectively in this way.

If desired, exit tabs 40 forming film slots 42 may be provided in the legs 26 and/or 28. The exit tabs 40 and film slots 42 allow coolant fluid to flow from the legs 26 and/or 28 onto a surface of the airfoil portion. The surface may be the pressure side surface 35 or the suction side surface 37. Fluid exiting the slots 42 helps form a cooling film over one or more of the exterior surfaces of the turbine engine component 10. Such film slots 42 may be useful in an open-cooling system.

If desired, the leading edge 44 of the airfoil portion 12 may be provided with a plurality of fluid outlets or exits 46 which allow a film of coolant to flow over the leading edge portions of the pressure side 35 and the suction side 37 of the airfoil portion 12. The outlets or exits 46 may be supplied with coolant from a supply cavity 48. The supply cavity 48 may communicate directly with a source (not shown) of cooling fluid, such as engine bleed air, or alternatively, the supply cavity 48 may be in fluid communication with the first leg 26.

The cooling microcircuit of the present invention may also be used in a closed loop system without film cooling for industrial gas turbine applications where the external thermal load is not as high as that for aircraft engine applications.

The cooling microcircuit arrangement of the present invention may be formed using any suitable technique known in the art. In a preferred method of forming the cooling microcircuit, one or more sheets formed from a refractory metal material may be configured in the shape of the cooling microcircuit arrangement 20 including the inlet 24 and the root inlet refresher leg 38, the legs 26, 28, and 36, the tip cooling microcircuits 30 and 32, the exits 33, the tabs 40, and the film slots 42. The refractory metal material sheets may be placed or positioned within a mold cavity. Thereafter, the turbine engine component 10 including the airfoil portion 12, the platform 14, and the root portion 16 may be cast from any suitable metal known in the art such as a nickel based superalloy, a titanium based superalloy, or an iron based superalloy. After the turbine engine component has been cast, the refractory metal material sheets may be removed using any suitable means known in the art, leaving the cooling microcircuit arrangement 20 of the present invention.

## Claims

1. A turbine engine component (10) comprising:
at least one cooling circuit (20) having a plurality of legs (26, 28, 36) through which a cooling fluid flows; and
a plurality of cooling devices (80) in at least one of said legs (26, 28), each of said cooling devices (80) having a heat transfer multiplier in the range of from 1.8 to 2.4 and a reattachment length in the range of from 1.9 to 2.5.

2. The turbine engine component according to claim 1, further comprising an airfoil portion (12) having a pressure side and suction side and said at least one cooling circuit (20) being imbedded between said pressure and suction sides.

3. The turbine engine component according to claim 1 or 2, further comprising said turbine engine component (10) having a root portion (16) and an inlet (24) for said cooling fluid located within said root portion (16) and said plurality of legs including a first leg (26), a second leg (28) in fluid communication with said first leg (26), and a third leg (36) in fluid communication with said second leg (28).

4. The turbine engine component according to claim 3, further comprising a refresher inlet (38) within said root portion (16) for introducing said cooling fluid into said third leg (36).

5. The turbine engine component according to claim 3 or 4, further comprising a plurality of cooling fluid outlets communicating with said first and third legs (26, 36).

6. The turbine engine component according to any preceding claim, wherein said cooling devices (80) have a heat transfer multiplier in the range of from 2.2 to 2.4.

7. The turbine engine component according to any preceding claim, wherein each of said cooling devices (80) has a cylindrical shape.

8. The turbine engine component according to any of claims 1 to 6, wherein each of said cooling devices (80) has a cube shape and wherein each said cube shaped cooling device (80) has one sidewall oriented substantially normal to a flow direction of said cooling fluid.

9. The turbine engine component according to any of claims 1 to 6, wherein each of said cooling devices (80) has a diamond shape and wherein each diamond shaped cooling device (80) has a tip and said tip is aligned with a flow direction of said cooling fluid.

10. The turbine engine component according to any preceding claim, wherein said component (10) comprises a turbine blade.

11. A cooling microcircuit (20) for use in a turbine engine component comprising:
a first leg (26) for receiving a cooling fluid;
a second leg (28) for receiving said cooling fluid from said first leg (26);
a third leg (36) for receiving said cooling fluid from said second leg (28);
at least one of said first and second legs (26, 28) containing a plurality of cooling devices (80); and
each of said cooling devices (80) having a heat transfer multiplier in the range of from 1.8 to 2.4 and a reattachment length in the range of from 1.9 to 2.5.

12. The cooling microcircuit according to claim 11, wherein said cooling microcircuit (20) has a serpentine shape.

13. The cooling microcircuit according to claim 11 or 12, further comprising an inlet (24) for introducing a first flow of said cooling fluid into said first leg (26) and a refresher inlet (38) for introducing a second flow of said cooling fluid into said third leg (36).

14. The cooling microcircuit according to any of claims 11 to 13, further comprising a plurality of outlets communicating with at least one of said first and third legs (26, 36) of said cooling microcircuit (20).

15. The cooling microcircuit according to any of claims 11 to 14, wherein each of said cooling devices (80) has a cylindrical shape.

16. The cooling microcircuit according to any of claims 11 to 14, wherein each of said cooling devices (80) has a cube shape.

17. The cooling microcircuit according to any of claims 11 to 14, wherein each of said cooling devices (80) has a diamond shape.

18. The cooling microcircuit according to any of claims 11 to 17, further comprising a plurality of cooling devices (80) arranged in at least one of said legs (26, 28, 36) and said plurality of cooling devices (80) being arranged in a staggered configuration.
